# EUROPÄISCHE PATENTSCHRIFT

(11) **EP 1 425 125 B1**
(45) Veröffentlichungstag und Bekanntmachung des Hinweises auf die Patenterteilung: **28.05.2008**
(21) Anmeldenummer: 02779299.3
(22) Anmeldetag: 04.09.2002
(51) Int. Cl.: B23B 27/00, B23B 29/02

(54) **SCHNEIDWERKZEUG**
CUTTING TOOL
OUTIL DE COUPE

(30) Priorität: 10.09.2001 DE 10145667
(43) Veröffentlichungstag der Anmeldung: 09.06.2004
(73) Patentinhaber: Hartmetall-Werkzeugsystem Paul Horn GmbH, 72072 Tübingen (DE)
(72) Erfinder: OETTLE, Matthias, 72585 Riederich (DE)
(74) Vertreter: Keck, Stephan
(86) Internationale Anmeldenummer: PCT/EP2002/009856
(87) Internationale Veröffentlichungsnummer: WO 2003/022491

(56) Entgegenhaltungen:
- EP-A- 0 385 280
- EP-A- 0 947 267
- EP-A- 0 983 814
- DE-A- 2 713 529
- US-A- 3 109 222
- ""Circle" Boring Bars with Throw-away Tungsten-carbide Tips" MACHINERY, Bd. 100, 25. April 1962 (1962-04-25), Seite 947 XP002226404

## Beschreibung

Die Erfindung betrifft ein Schneidwerkzeug, insbesondere zum Ausdrehen von Bohrungen, mit einem Spannteil zum Festlegen des Werkzeuges in einem Klemmhalter, wobei an der dem Klemmhalter abgekehrten Seite des Spannteils sich ein gegenüber dem Spannteil im Querschnitt verjüngtes Halsteil anschließt, an dessen freiem Ende sich einstückig ein Schneidteil anschließt, das an seinem äußersten Ende mit einer Schneidkante versehen ist, an die sich eine Spanfläche des Schneidteils in Richtung des Halsteils anschließt. Ein vergleichbares Schneidwerkzeug ist durch die EP-B-0 385 280 bekannt. Die bekannte Lösung betrifft einen Innendrehmeißel als Schneidwerkzeug zum Bearbeiten der Innenfläche von Bohrungen, beispielsweise zum Stechdrehen von umlaufenden Nuten in die Bohrungswand, zum Feinbearbeiten durch Feindrehen der Bohrungswand, zum Gewindedrehen in einer Bohrungswand und dergleichen mehr.

Beim Bearbeiten der Innenwand einer Bohrung hat die Schneide des Werkzeuges beim Stechdrehen eine radiale Vorschubrichtung. Hierbei muß die Schneide in Form einer Schneidkante möglichst genau in einer sich parallel zu dieser radialen Vorschubrichtung erstreckenden Vorschub-Diametralebene der zu bearbeitenden Bohrung liegen. Nur bei dieser Lage der Schneidkante ergibt sich ein optimaler Freiwinkel. Abstände der Schneide von der Vorschub-Diametralebene ergeben Freiwinkel, die sich beim Spanabheben nachteilig auswirken, beispielsweise zu Schwingungen des Werkzeuges führen können. Aus diesem Grunde muß eine sehr genaue Drehstellung des Werkzeuges im Klemmhalter erreicht werden, die sich auch bei Belastung des Werkzeuges nicht merkbar ändern darf. Besonders kritisch sind Abstände der Schneide von dieser Diametralebene bei zu bearbeitenden Bohrungen mit kleinem Durchmesser, da dort schon ein geringer von Null verschiedener Abstand zu einer großen Änderung des Freiwinkels führt. Um dem zu begegnen, weist das bekannte Schneidwerkzeug nach der Europäischen Vorveröffentlichung an seinem Spannteil zumindest teilweise aufeinander zu konvergierende Spannflächen auf, die über ein Klemmteil eines Klemmhalters, mit dem sich das Schneidwerkzeug an einer Bearbeitungsmaschine, beispielsweise in Form einer Drehmaschine, festlegen läßt, in Anlage bringbar sind mit entsprechend konvergierenden Anlageflächen des Klemmhalters. Mittels des genannten Formschlusses läßt sich eine genau definierte Drehstellung des bekannten Hakenwerkzeuges dadurch erreichen, daß die radiale Erweiterung der Aufnahmeaussparung im Klemmhalter und der radiale Vorsprung am Schaftteil des Hakenwerkzeuges durch die Einwirkung des Klemmittels zu einer definierten Anlage der Spannflächen des radialen Vorsprunges an die Anlageflächen der Erweiterung führen, wobei gleichzeitig dadurch auch eine Änderung der Schneidenlage senkrecht zu der Vorschub-Diametralebene bei Belastung des Werkzeuges vermieden wird, da die Drehstellung des Schneidwerkzeuges in Bezug auf den Klemmhalter dadurch gesichert ist, daß die Anlagen der Spannflächen an den Anlageflächen an einem gegenüber dem Radius der Aufnahmebohrung vergrößerten Radius wirken.

Um Bohrungen mit extrem kleinen Durchmesser bearbeiten zu können ist es bei der bekannten Lösung als vorteilhaft erkannt worden, das Hakenwerkzeug einstückig auszubilden. Weitere dahingehende Vorteile ergeben sich, wenn das Hakenwerkzeug aus Hartmetall besteht, denn durch den großen E-Modul von Hartmetallwerkstoffen bleibt die Schneide auch bei verhältnismäßig hohen Belastungen exakt in der ursprünglich eingestellten Stellung, so daß eine Änderung der Schneidenlage in Bezug auf die Vorschub-Diametralebene bei Belastung praktisch ausgeschlossen ist.

Es hat sich jedoch gezeigt, daß trotz der beschriebenen Maßnahmen das bekannte Schneidwerkzeug dann auf seine Grenzen stößt, wenn Bohrungen mit extrem kleinem Durchmesser unter einem Millimeter, beispielsweise 0,7 mm, zu bearbeiten sind. Trotz der vorteilhaften Klemmhalterung, der einstückigen Ausbildung des Werkzeuges und sein Aufbau durch Einsatz von Hartmetallwerkstoffen, ermöglichen es diese bekannten Maßnahmen nicht, in diesen Bearbeitungsbereich mit Bohrungsdurchmessern kleiner als 1 mm vorzustoßen, um zu den gewünschten Bearbeitungsqualitäten zu gelangen.

Durch die EP-A-0 947 267 ist ein gattungsgemäßes Werkzeug bekannt, mit einem Halter, an dem mittels einer Schraubverbindung eine Dreischneidenplatte als Schneidwerkzeug festlegbar ist. Das freie Ende des Halters, an dem das Schneidwerkzeug aufnehmbar ist, verfügt über Aussparungen, wodurch Verstärkungsrippen entstehen, so daß trotz der durch die Ausschneidungen reduzierten Halterteile eine derart gute Verstärkung für die Schneidplatte erfolgt, daß die Bearbeitungsqualität schädigende Vibrationen während der Bearbeitung durch den Halter sicher aufgenommen und abgestützt sind. Aufgrund der flächigen Anlage der Dreischneidenplatte am Halterende und der aufgezeigten Festlegemöglichkeit mittels einer Schraubverbindung kann es zu Fehljustierungen der Bearbeitungsschneide kommen und darüber hinaus baut die bekannte Lösung derart groß auf, daß deren Verwendung bei Bohrungen mit extrem kleinen Durchmessern nicht möglich ist.

Ausgehend von diesem Stand der Technik liegt daher der Erfindung die Aufgabe zugrunde, das bekannte Schneidwerkzeug dahingehend zu verbessern, daß unter Beibehalten seiner Vorteile auch Bohrungen mit extrem kleinen Durchmessern, beispielsweise deutlich kleiner als 1 mm, unter Beibehalten des hohen Qualitätsstandards bearbeitbar sind. Diese Aufgabe wird durch die Kombination der im geltenden Anspruch 1 genannten Merkmale gelöst.

Dadurch, daß gemäß dem kennzeichnenden Teil des Patentanspruches 1 quer zu der Ebene der Schneidkante entlang des Halteteils verlaufend dieses zwei Verstärkungsteile aufweist, die in der Art von Verstärkungsrippen sich in Richtung des Schneidteils konvergierend verjüngen, die in Bezug auf das Halteteil diametral einander gegenüberliegen und die ihre größte Breite an der Stelle ihres Überganges zum Schaftteil einnehmen, ist ein hohes Maß an Aussteifung für das Halsteil des Schneidwerkzeuges und das an seinem freien Ende angeordnete Schneidteil mit seiner Schneide bzw. Schneidkante erreicht. Bei konventionell ausgebildetem Halter erlauben die Verstärkungsrippen des Schneidteils eine sichere Aufnahme der in das Schneidteil eingeleiteten Bearbeitungskräfte über das Halteteil in den Schaftteil und weiter in das der Bearbeitungsmaschine zuzurechnende Klemmteil. Insbesondere begegnen die Verstärkungsrippen auftretenden Schwingungen bei der Bearbeitung mit dem Schneidteil und halten dieses genau in seiner benötigten Bearbeitungsebene. Da die Verstärkungsrippen senkrecht zu der Ebene des Schneidteils mit seiner Schneidkante verlaufen, nehmen sie wenig Bauraum ein und im Hinblick auf ihre konvergierende Ausgestaltung erlauben sie das . Eingreifen des Schneidteils auch in Bohrungen mit kleinen Durchmessern.

Dadurch, daß vorzugsweise die Verstärkungsrippen durch einen Schleifvorgang aus dem Halsteil gewonnen sind und in Richtung des Schneidteils jeweils zwei unterschiedliche Schliffbilder mit unterschiedlichen, vorzugsweise konkaven Krümmungsradien aufweisen, sind zum einen sehr hohe Abstützkräfte für das Schneidteil erreichbar und zum anderen der benötigte Aufbauraum für die Verstärkungsrippen optimiert, so daß ein hohes Maß an Aussteifung erreicht ist mit geometrisch klein aufbauenden Verstärkungsrippen, die dergestalt den Eingriff des Schneidteils auch in Bohrungen für einen Bearbeitungsvorgang erlauben, deren Durchmesser kleiner als 1 mm, insbesondere 0,7 mm ist.

Weitere vorteilhafte Ausgestaltungen des erfindungsgemäßen Schneidwerkzeuges sind Gegenstand der weiteren Unteransprüche.

Die Erfindung in ihrer weiteren vorteilhaften Ausgestaltung ist in der folgenden Beschreibung anhand eines Ausführungsbeispiels im einzelnen erläutert. Dabei zeigen in prinzipieller Darstellung in starker Vergrößerung die
- Fig.1: eine perspektivische Ansicht auf das Schneidwerkzeug;
- Fig.2: eine Unteransicht auf das Schneidwerkzeug nach der Fig.1;
- Fig.3: in weiterer Vergrößerung einen Ausschnitt auf das vordere Kopfteil des Schneidwerkzeuges nach der Fig.1;
- Fig. 4 und 5: jeweils einen Schnitt entlang der Linie I - I bzw. II - II in Fig.3.

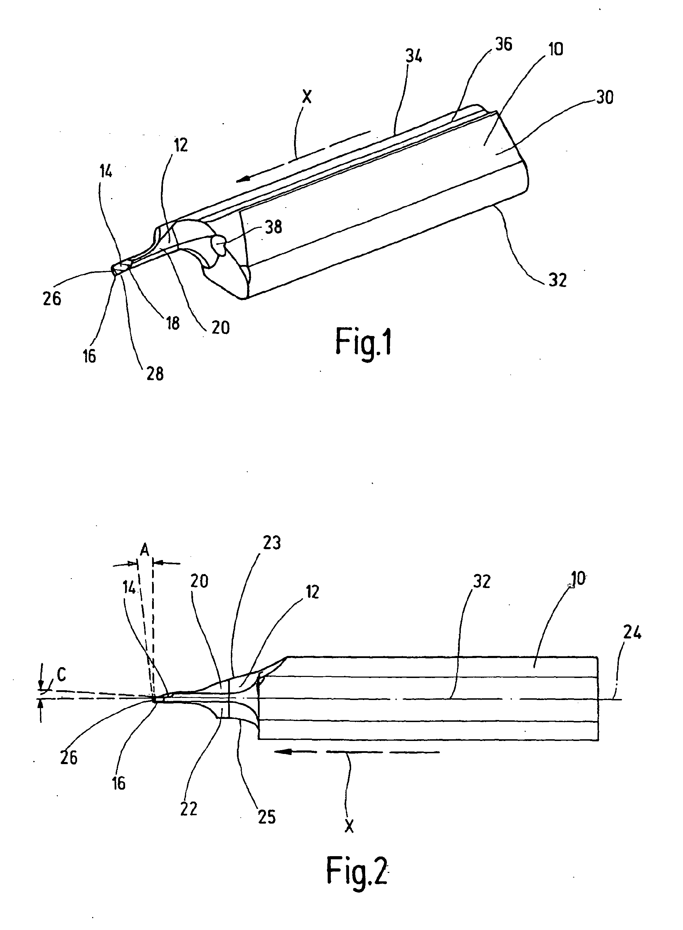

Das in den Figuren dargestellte Schneidwerkzeug dient insbesondere dem Ausdrehen von Bohrungen mit einem Bohrungsdurchmesser < 1 mm, vorzugsweise im Bereich von 0,7 mm liegend. Das Schneidwerkzeug weist ein Spannteil 10 zum Festlegen des Werkzeuges in einem nicht näher dargestellten Klemmhalter auf. Als Klemmhalter können beispielsweise solche zum Einsatz kommen, wie sie in der Europäischen Patentschrift 0 385 280 der Anmelderin beschrieben sind. An der dem Klemmhalter abgekehrten Seite des Spannteils 10 schließt sich ein gegenüber dem Spannteil 10 im Querschnitt verjüngtes Halsteil 12 an, an dessen freiem Ende sich einstükkig wiederum ein Schneidteil 14 anschließt, das an seinem äußersten Ende mit einer Schneidkante 16 versehen ist, an die sich eine Spanfläche 18 des Schneidteils 14 in Richtung des Halsteils 12 anschließt. Die Bearbeitungsrichtung des Werkzeuges ist in den Fig.1 bis 3 jeweils mit einem mit "X" bezeichneten Pfeil wiedergegeben.

Wie insbesondere die Fig.2 zeigt, weist quer zu der Ebene mit der Schneidkante 16 entlang des Halsteils 12 verlaufend dieses zwei Verstärkungsteile in Form zweier Verstärkungsrippen 20,22 auf. Die beiden Verstärkungsrippen 20,22 verjüngen sich in konvergierender Art in Richtung des Schneidteils 14. Ferner liegen die beiden Verstärkungsrippen 20,22 in Bezug auf das Halsteil 12 diametral einander gegenüber, insbesondere bezogen auf die Längsachse 24 des Schneidwerkzeuges. Das Halsteil 12 erstreckt sich im wesentlichen rotationssymmetrisch um die genannte Längsachse 24 und flügelartig erstrecken sich beidseitig der Längsachse 24 entlang des Halsteils 12 die beiden Verstärkungsrippen 20,22. Des weiteren nehmen die beiden Verstärkungsrippen 20,22 ihre größte Breite an der Stelle ihres Überganges zum Spannteil 10 ein, das man auch als Schaft oder Schaftteil des Schneidwerkzeuges bezeichnen kann.

Die beiden Verstärkungsrippen 20,22 wie auch die sonstigen Geometrien des Schneidwerkzeuges sind insbesondere durch einen Schleifvorgang erhalten und die derart aus dem Halsteil 12 erhaltenen Verstärkungsrippen 20,22 weisen in Richtung des Schneidteils 14 jeweils zwei unterschiedliche Schliffbilder mit unterschiedlichen, vorzugsweise konkaven Krümmungsradien auf. Um ein hohes Maß an Eingriffstiefe für die Schneidkante 16 zu gewährleisten, weisen demgemäß in Richtung des Schneidteils 14 die für die beiden Verstärkungsrippen 20,22 gewählten Schliffbilder eine stärkere Krümmung auf als in Richtung des Spannteils 10.

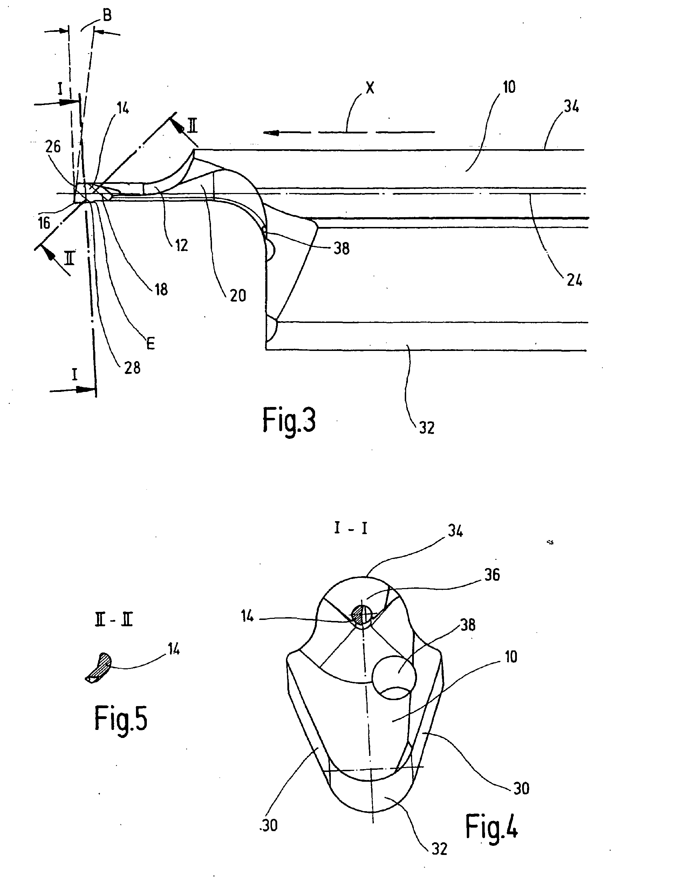

Die Freifläche 26 des Schneidteils 14, die in Bearbeitungsrichtung X am vordersten Ende angeordnet ist, ist gegenüber der Vertikalen (vergl. Fig.2) um einen Winkel A, vorzugsweise von 5°, zurückgeneigt angeordnet. Die dahingehend vorderste Freifläche 26 des Schneidteils 14 ist dann wiederum gegenüber der Schneidkante 16 selbst um einen Winkel B, vorzugsweise von 8°, (vgl. Fig.3) zurückgeneigt angeordnet. Wie des weiteren die Fig.2 zeigt, ist wiederum die Spanfläche 18 in Bearbeitungsrichtung X gegenüber der Horizontalen um einen Winkel C, vorzugsweise von 5°, zurückgeneigt, und zwar in Richtung des Spann- oder Schaftteils 10. Des weiteren geht in Bearbeitungsrichtung X die Schneidkante 16 mit ihrem freien Ende in eine Stützfläche 28 über (vgl. Fig.3), die parallel zur Bearbeitungsrichtung X verlaufend um einen Überstand E über das Halsteil 12 mit seiner Außenumfangsfläche vorsteht. Mithin bildet die Stützfläche 28 über ihren Überstand E eine weitere Freifläche aus und die Schneidkante 16 ist im Hinblick auf das Halsteil 12 in der Art eines Hakenwerkzeuges ausgebildet.

Aus der Darstellung nach den Fig.1 und 4 ergibt sich, daß das Spannteil 10 im wesentlichen zwei Spannflächen 30 aufweist, die in Richtung der Unterseite 32 des Spannteils 10 aufeinander zu konvergieren und in Richtung der Oberseite 34 des Spannteils 10 gehen diese in eine halbkreisförmige Dachfläche 36 über. Dergestalt läßt sich das Spannteil 10 in eine korrespondierende Aufnahme eines nicht näher dargestellten Klemmteils mittels einer Klemmschraube festlegen. Nähere Einzelheiten für ein dahingehendes Klemmteil finden sich in der EP-B-0 385 280, so daß an dieser Stelle hierauf nicht näher eingegangen wird. Im Bereich des Spannteils 10, das von den beiden Spannflächen 30 begrenzt ist, verläuft parallel zur Bearbeitungsrichtung X ein Kühlmittelzufuhrkanal 38. Über den dahingehenden Kühlmittelzufuhrkanal 38 läßt sich insbesondere Kühlschmiermittel zuführen in Richtung des Eingriffs der Schneidkante 16 in ein zu bearbeitendes Werkzeug (nicht dargestellt). An der Stelle, an der der Kühlmittelzufuhrkanal 38 ins Freie tritt, ist das Halsteil 12 gegenüber dem Spannteil 10 (vgl. Fig.3) stärker zurückversetzt angeordnet als an der diametral gegenüberliegenden Stelle im Bereich der Oberseite 34 des Schneidwerkzeuges. Aufgrund der dahingehenden Anordnung nebst den zugehörigen Schliffbildern 23,25 für die Außenkontur des Schneidwerkzeuges wird zumindest in einer Diametralebene, wie dies die Fig.2 verdeutlicht, eine Art domartige Abstützung für das eigentliche Schneidteil 14 mit seiner Schneidkante 16 erzeugt.

Als Hartmetallsorten erweisen sich als besonders geeignet solche der Art MG12, TN35, T125 oder TF45. Die in den Figuren des weiteren dargestellte Schneidwerkzeuganordnung betrifft eine Ausführung "rechts" und durch eine spiegelbildliche Anordnung der gezeigten Figuren ergibt sich eine entsprechende Ausführung "links", sofern dies für den Bearbeitungszweck notwendig werden sollte.

## Patentansprüche

1. Schneidwerkzeug, insbesondere zum Ausdrehen von Bohrungen, mit einem Spannteil (10) zum Festlegen des Werkzeuges in einem Klemmhalter, wobei das Spannteil (10) zwei Spannflächen (30) aufweist, die in Richtung der einen Seite (32) des Spannteils (10) aufeinander zu konvergieren und in Richtung der anderen Seite (34) des Spannteils (10) in eine Dachfläche (36) übergehen und wobei an der dem Klemmhalter abgekehrten Seite des Spannteils (10) sich ein gegenüber dem Spannteil (10) im Querschnitt verjüngtes, stabförmiges Halsteil (12) anschließt, an dessen freiem Ende sich einstückig ein Schneidteil (14) anschließt, das an seinem äußersten Ende mit einer Schneidkante (16) versehen ist, an die sich eine Spanfläche (18) des Schneidteils (14) in Richtung des Halsteils (12) anschließt, **dadurch gekennzeichnet, daß** quer zu der Ebene der Schneidkante (16) entlang des Halsteils (12) verlaufend dieses zwei Verstärkungsteile aufweist, die in der Art von Verstärkungsrippen (20,22) sich in Richtung des Schneidteils (14) konvergierend verjüngen, die in Bezug auf das Halteteil (12) diametral einander gegenüberliegen und die ihre größte Breite an der Stelle ihres Überganges zum Spannteil (10) einnehmen.

2. Schneidwerkzeug nach Anspruch 1, **dadurch gekennzeichnet, daß** die Verstärkungsrippen (20,22) durch einen Schleifvorgang aus dem Halsteil (12) gewonnen sind und in Richtung des Schneidteils (14) jeweils zwei unterschiedliche Schliffbilder (23,25) mit unterschiedlichen, vorzugsweise konkaven Krümmungsradien aufweisen.

3. Schneidwerkzeug nach Anspruch 2, **dadurch gekennzeichnet, daß** in Richtung des Schneidhalses (14) die für die Verstärkungsrippen (20,22) gewählten Schliffbilder (23,25) eine stärkere Krümmung aufweisen als in Richtung des Spannteils (10).

4. Schneidwerkzeug nach einem der Ansprüche 1 bis 3, **dadurch gekennzeichnet, daß** die Freifläche (26) des Schneidteils (14), die in Bearbeitungsrichtung (X) am vordersten Ende angeordnet ist, gegenüber der Vertikalen um einen Winkel (A), vorzugsweise von 5°, zurückgeneigt angeordnet ist.

5. Schneidwerkzeug nach Anspruch 4, **dadurch gekennzeichnet, daß** die vorderste Freifläche (26) des Schneidteils (14) gegenüber der Schneidkante (16) um einen weiteren Winkel (B), vorzugsweise von 8°, zurückgeneigt angeordnet ist.

6. Schneidwerkzeug nach einem der Ansprüche 1 bis 5, **dadurch gekennzeichnet, daß** die Spanfläche (18) in Bearbeitungsrichtung (X) gegenüber der Horizontalen um einen dritten Winkel (C), vorzugsweise von 5°, zurückgeneigt ist.

7. Schneidwerkzeug nach einem der Ansprüche 1 bis 6, **dadurch gekennzeichnet, daß** in Bearbeitungsrichtung (X) die Schneidkante (16) mit ihrem freien Ende in eine Stützfläche (28) übergeht, die parallel zur Bearbeitungsrichtung (X) verlaufend um einen Überstand (E) über das Halsteil (12) vorsteht.

8. Schneidwerkzeug nach einem der Ansprüche 1 bis 7, **dadurch gekennzeichnet, daß** das Spannteil (10) zwei Spannflächen (30) aufweist, die in Richtung der Unterseite (32) des Spannteils (10) aufeinander zu konvergieren und in Richtung der Oberseite (34) des Spannteils (10) in eine halbkreisförmige Dachfläche (36) übergehen.

9. Schneidwerkzeug nach Anspruch 8, **dadurch gekennzeichnet, daß** im Bereich des Spannteils (10), das von den beiden Spannflächen (30) begrenzt ist, parallel zur Bearbeitungsrichtung (X) ein Kühlmittelzufuhrkanal (38) verläuft..

10. Schneidwerkzeug nach Anspruch 9, **dadurch gekennzeichnet, daß** an der Stelle, an der der Kühlmittelzufuhrkanal (38) ins Freie tritt, das Halsteil (12) gegenüber dem Spannteil (10) stärker zurücktretend in diesen übergeht als an der diametral gegenüberliegenden Stelle.

## Claims

1. A cutting tool, in particular for hollowing drill holes, having a clamping component (10) for fastening the tool in a tool holder, the clamping component (10) having two clamping surfaces (30) which converge toward each other in the direction of one side (32) of the clamping component (10) and in the direction of the other side (34) of the clamping component (10) change in shape to that of roofage (36), and a rod-shaped neck component (12) tapered in cross-section relative to the clamping component (10) adjoining on the side of the clamping component (10), the cutting component (14) being provided on its outer end with a cutting edge (16) which is adjoined by a face (18) of the cutting component (14) in the direction of the neck component (12), ***characterized in that*** the neck component (12) has extending along it transversely to the plane of the cutting edge (16) two reinforcing components which, in the form of reinforcing ribs (20, 22) taper as they converge in the direction of the cutting component (14), such reinforcing ribs (20, 22) being positioned diametrically opposite each other in relation to the neck component (12) and assume their greatest width at the point of their transition to the clamping component (10).

2. The cutting tool as claimed in claim 1, *wherein* the reinforcing ribs (20, 22) are obtained by a grinding process from the neck component (12) and exhibit two different grinding patterns (23, 25) with different, preferably concave, radii of curvature in the direction of the cutting component (14).

3. The cutting tool as claimed in claim 2, wherein, in the direction of the cutting neck (14), the grinding patterns (23, 25) selected for the reinforcing ribs (20, 22) exhibit greater curvature than in the direction of the clamping component (10).

4. The cutting tool as claimed in one of claims 1 to 3, *wherein* the free surface (26) of the cutting component (14), which is positioned on the foremost end in the direction of machining (X), is tilted backward from the vertical by an angle (A), preferably 5°

5. The cutting tool as claimed in claim 4, *wherein* the foremost free surface (26) of the cutting component (14) is tilted backward from the cutting edge (16) by an additional angle (B), preferably 8°.

6. The cutting tool as claimed in one of claims 1 to 5, *wherein* the face (18) is tilted backward from the horizontal in the direction of machining (X) by a third angle (C), preferably 5°.

7. The cutting tool as claimed in one of claims 1 to 6, *wherein* the free end of the cutting edge (16) becomes, in the direction of machining, a supporting surface (28) which extends parallel to the direction of machining (X) and projects beyond the neck component (12) by the amount of an excess (E).

8. The cutting tool as claimed in one of claims 1 to 7, *wherein* the clamping component (10) has two clamping surfaces (30) which converge toward each other in the direction of the bottom (32) of the clamping component (10) and change in shape to that of semicircular roofage (36) in the direction of the top (34) of the clamping component (10).

9. The cutting tool as claimed in claim 8, *wherein* a coolant feed channel (38) extends parallel to the direction of machining (X) in the area of the clamping component (10) which is bounded by the two clamping surfaces (30).

10. The cutting tool as claimed in claim 9, *wherein* the neck component (12) recedes farther into the clamping component (10) as it undergoes transition to the latter, at the point at which the coolant feed channel (38) empties into the open than on the diametrically opposite side.

## Revendications

1. Outil de coupe, en particulier pour le tournage d'alésages, avec une partie de serrage (10) pour la fixation de l'outil dans un support de bridage, dans lequel la partie de serrage (10) présente deux surfaces de serrage (30) qui convergent en direction d'un côté (32) de la partie de serrage (10) et en direction de l'autre côté (34) de la partie de serrage (10), passe à une surface de sommet (36), et dans lequel, sur le côté détourné par rapport au support de bridage de la partie de serrage (10), se raccorde une partie de col (12) en forme de barrette, amincie dans la section transversale par rapport à la partie de serrage (10), sur l'extrémité libre de laquelle partie de col se raccorde d'un seul tenant une partie coupante (14) qui est munie, sur son extrémité extérieure, d'un bord coupant (16) sur lequel se raccorde une surface de partie de coupe (18) de la partie coupante (14) en direction de la partie de col (12), **caractérisé en ce que**, transversalement par rapport au plan du bord de coupe (16) le long de la partie de col (12), sont prévues deux parties de renfort qui, à la manière de nervures de renfort (20, 22), vont en s'amincissant de façon convergente en direction de la partie de coupe (14) qui, par rapport à la partie de col (12), sont diamétralement opposées entre elles et reçoivent la plus grande largeur à l'endroit de leur transition avec la partie de serrage (10),

2. Outil de coupe selon la revendication 1, **caractérisé en ce que** les nervures de renfort (20, 22) sont obtenues par un procédé de meulage à partir de la partie de col (12) et, en direction de la partie de coupe (14), présentent respectivement deux images de meulage différentes (23, 25) avec des rayons de courbure différents, de préférence concaves.

3. Outil de coupe selon la revendication 2, dans lequel, en direction du col de coupe (14), les images de meulage (23, 25) choisies pour les nervures de renfort (20, 22) présentent une plus forte courbure que dans la direction de la partie de serrage (10).

4. Outil de coupe selon l'une des revendications 1 à 3, **caractérisé en ce que** la surface libre (26) de la partie de coupe (14), qui est située dans la direction d'usinage (X) sur l'extrémité la plus avant, est disposée, par rapport à la verticale, selon un angle (A), de préférence de 5°, incliné vers l'arrière.

5. Outil de coupe selon la revendication 4, **caractérisé en ce que** la surface libre la plus avant (26) de la partie de coupe (14) , par rapport au bord de coupe (16), est disposée avec un plus grand angle (B), de préférence de 8°, incliné vers l'arrière.

6. Outil de coupe selon l'une des revendications 1 à 5, **caractérisé en ce que** la surface de coupe (18), dans la direction d'usinage (X), par rapport à l'horizontale, est inclinée vers l'arrière selon un troisième angle (C), de préférence de 5°.

7. Outil de coupe selon l'une des revendications 1 à 6, **caractérisé en ce que**, dans la direction d'usinage (X) , le bord de coupe (16) passe avec son extrémité libre dans une surface d'appui (28) qui, s'étendant parallèlement à la direction d'usinage (x), fait saillie selon un excédent (E) sur la partie de col (12).

8. Outil de coupe selon l'une des revendications 1 7, **caractérisé en ce que** la partie de serrage (10) présente deux surfaces de serrage (30) qui convergent en direction du côté inférieur (32) de la partie de coupe (10) et en direction du côté supérieur (34) de la partie de serrage (10), dans une surface de toit (36) en forme de demi-cercle.

9. Outil de coupe selon la revendication 8, **caractérisé en ce que**, dans la zone de la partie de serrage (10), qui est délimitée par les deux surfaces de serrage (30), s'étend, parallèlement la direction d'usinage (X), un canal d'alimentation de réfrigérant (38).

10. Outil de coupe selon la revendication 9, **caractérisé en ce que**, à l'emplacement sur lequel le canal d'amenée de carburant (38) arrive à l'air libre, la partie de col (12), par rapport à la partie de serrage (10), forme un plus grand retrait dans cette zone que dans l'emplacement diamétralement opposé.
